Europäisches Patentamt

European Patent Office

Office européen des brevets

(19)

(11) **EP 1 067 528 A2**

(12) **EUROPEAN PATENT APPLICATION**

(43) Date of publication:
**10.01.2001 Bulletin 2001/02**

(51) Int Cl.$^7$: **G11B 7/12**

(21) Application number: **00305816.1**

(22) Date of filing: **10.07.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **08.07.1999 JP 19503499**

(71) Applicant: **SONY CORPORATION**
**Tokyo 141 (JP)**

(72) Inventor: **Asoma, Yoshito, c/o Sony Corporation**
**Tokyo (JP)**

(74) Representative: **Turner, James Arthur et al**
**D. Young & Co.,**
**21 New Fetter Lane**
**London EC4A 1DA (GB)**

(54) **Integrated optical unit, optical head and optical recording and/or reproducing apparatus**

(57)    An integrated optical unit, optical head, and optical recording and/or reproducing apparatus which enables detection of a tracking error signal by the three-beam method by making it possible to write and/or read information to and/or from two types of optical discs using two different wavelength laser beams. The error signal being generated by detecting the return components of the laser beams reflected from the optical discs using a plurality of photodetectors located in the plane of the integrated optical unit. The photodetectors for detecting the first order return components being disposed on an extension of a line connecting a point inside an opening of the package by which a main ray of the first laser emitted from a two-wavelength semiconductor laser passes and a point inside the opening by which a main ray of the second laser passes.

FIG.1

**Description**

The present invention relates to an integrated optical head and an optical recording and/or reproducing apparatus which uses this integrated optical head.

There are currently a number of optical disc mediums available, including read-only optical discs called CDs ("compact disc") and recordable optical discs called CD-R (Compact Disc-Recordable). These optical discs are in wide use since they can be manufactured inexpensively in mass quantities and information read from or written to them is relatively stable.

The recent trend in this field is to try to increase the recording capacity of these optical discs. Recently, DVD (Digital Versatile or Video Disc) has become a popular medium. The DVD has the same outside dimension as the CD with a dramatically increased recording capacity. The DVD's capacity is enough to record data for a full movie with broadcast image quality. To attain this higher recording density and larger recording capacity, the DVD uses a shorter wavelength laser than that used with the CD.

Optical recording and/or reproducing apparatus have recently been developed to write and read information to and from the DVD, CD, and CD-R formats. In these apparatus, which are compatible with all these formats, the optical system for CD and CD-R and that for DVD should desirably use as many common parts as possible for a more compact design and to reduce manufacturing costs. For these same reasons, optical elements forming these systems should be integrated as much as possible.

To integrate parts as much as possible, an optical head has been proposed which integrates a light source adapted to selectively emit laser light for CD, CD-R and DVD, and an integrated optical unit in one chip in which light detecting elements detect a return component of the laser beam emitted from the light source. An optical recording and/or reproducing apparatus having such an optical head is currently under development.

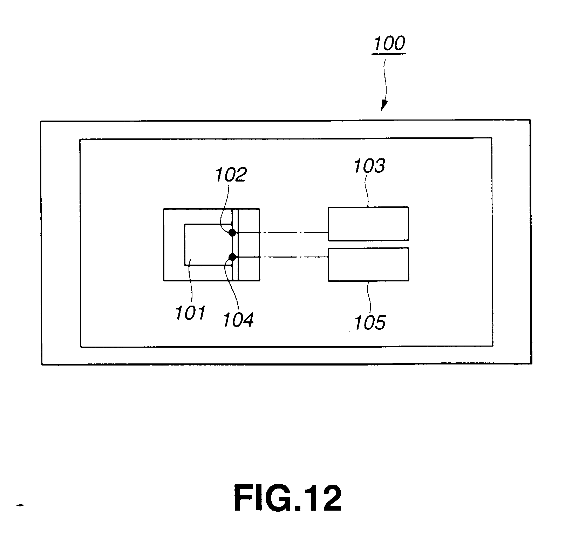

Figure 12 schematically shows a conventional integrated optical unit 100 used in a conventional optical head. The integrated optical unit 100 includes a light source 101 having a light- emitting point 102 from which a laser for CD and CD-R is emitted, a first photodetector 103 disposed at a position opposite to the first light emitting point 102 to detect a return component of the laser for CD and CD-R, and a second photodetector 105 disposed at a position opposite to a second light emitting point 104 of the light source 101, from which a laser for DVD is emitted, to detect a return component of the laser for DVD. The first and second photodetectors 103 and 105 are located very close to one another. Thus, it is difficult to provide any other photodetector between these first and second photodetectors 103 and 105.

To detect a tracking error signal for CD and CD-R, the three-beam method is primarily used since it provides a high reading capability. For detection of a tracking error signal by the three-beam method, the laser light is split into a main beam and two side beams. Return components of the two side beams are detected by two photodetectors disposed at the right and left of a photodetector positioned to detect the return component of the main beam.

Because the aforementioned conventional integrated optical unit 100 locates the second photodetector 105 near the first photodetector 103 which detects the main beam return component of the laser for CD and CD-R, it is difficult to fit any other photodetectors into the unit for detecting the side beam return components. Thus, the three-beam method for detection of a tracking error signal from CD and CD-R cannot be used in the above-mentioned conventional integrated optical unit.

Various respective aspects and features of the invention are defined in the appended claims.

Embodiments of the present invention can provide an integrated optical unit adapted to be compatible with two types of optical discs to and/or from which information is written and/or read using different wavelength laser beams and in which photodetectors can be disposed relatively freely; whereby the three-beam method can be used to detect a tracking error signal.

Embodiments of the present invention can provide an optical head using the integrated optical unit, and an optical reading and/or reproducing apparatus using the optical head.

The invention provides an integrated optical unit, optical head and optical recording and/or reproducing apparatus, as described hereinafter. The integrated optical unit is intended for use in an optical head compatible with both a first optical recording medium to and/or from which information is written and/or read with a first laser and a second optical recording medium to and/or from which information is written and/or read with a second laser, shorter in wavelength from the first laser. The integrated optical unit includes a light emitter for emitting the first and second laser beams from points thereof near each other. Also, the integrated optical unit includes a light detector for detecting the return component of the first laser reflected from the first optical recording medium and the return component of the second laser reflected from the second optical recording medium. The light emitter and light detector are housed in an integrated package.

When information is written to and/or read from the first optical recording medium by means of the integrated optical unit, the first laser is used to emit light out of the package through an opening, that is guided to the first optical recording medium. The return component of the first laser, reflected from the first optical recording medium is guided into the package through the opening, and detected by the light detector.

Similarly, when information is written to and/or read from the second optical recording medium by means of the integrated optical unit, the second laser is used to emit light out of the package through an opening, that is guided to the second optical recording medium. The return component of the second laser, reflected from the second optical recording medium is guided into the package through the opening and detected by the light detector.

The light detector includes a plurality of photodetectors, at least two of which lie in the plane of the integrated optical unit on an extension of a line connecting a point inside the opening of the package (by which a main ray of light of the first laser emitted from the light emitter passes) and a point inside the opening of the package (by which a main ray of light of the second laser emitted from the light emitter passes).

Since, as mentioned above, the integrated optical unit has disposed therein at least two of the photodetectors, it is possible to detect the return components of the first and second laser beams while using the other photodetectors in the light detector in other ways. For example, a photodetector for detecting positive and negative first-order light beams of the first laser can be disposed appropriately to detect a tracking error signal by the three-beam method.

The optical head according to the present invention is compatible with both a first optical recording medium to and/or from which information is written and/or read with a first laser and a second optical recording medium to and/or from which information is written and/or read with a second laser, shorter in wavelength from the first laser. The optical head includes an integrated optical unit, and a light converger for converging the first laser light and propagating it to the first optical recording medium, and converging the second laser light and propagating it to the second optical recording medium.

The integrated optical unit included in the optical head includes a light emitter for emitting the first and second laser beams from points thereof near to each other, and a light detector (which includes a plurality of photodetectors) for detecting a return component of the first laser beam reflected from the first optical recording medium and a return component of the second laser beam reflected from the. second optical recording medium. The light emitter and light detector are encased in a package having an opening.

When information is written to and/or read from the first optical recording medium by means of the optical head, the first laser beam is emitted from the light emitter out of the package through the opening and guided to the first optical recording medium. The return component of the first laser beam is reflected from the first optical recording medium, guided into the package through the opening, and detected by the light detector.

Likewise, when information is written to and/or read from the second optical recording medium by means of the optical head, the second laser beam is emitted from the light emitter. The second laser is emitted out of the package through the opening and guided to the second optical recording medium. The return component of the second laser beam is reflected from the second optical recording medium, guided into the package through the opening, and detected by the light detector.

At least two of the photodetectors in the light detector lie in the plane of the integrated optical unit on an extension of a line connecting a point inside the opening of the package, by which a main ray of light of the first laser beam emitted from the light emitter passes, and a point inside the opening of the package, by which a main ray of light of the second laser beam emitted from the light emitter passes.

The optical recording and/or reproducing apparatus according to the present invention is provided with the optical head described above, and is compatible with both a first optical recording medium, to and/or from which information is written and/or read with a first laser light, and a second optical recording medium, to and/or from which information is written and/or read with a second laser shorter in wavelength than the first laser.

The invention will now be described by way of example with reference to the accompanying drawings, throughout which like parts are referred to by like references, and in which:

Figure 1 is a block diagram of an embodiment of the optical recording and/or reproducing apparatus according to the present invention;
Figure 2 schematically shows an embodiment of the optical head used in the optical recording and/or reproducing apparatus in Figure 1;
Figure 3 schematically shows an embodiment of the integrated optical unit used in the optical head in Figure 2;
Figure 4 is a perspective view of the integrated optical unit, showing the inside of the package of the integrated optical unit;
Figure 5 is a plan view of the package;
Figure 6 is a plan view of an example of the hologram used in the integrated optical unit;
Figure 7 is a plan view of the package housing an variant of the photodetector IC provided in the integrated optical unit;
Figure 8 is a plan view of the package encasing another variant of the photodetector IC;
Figure 9 is a plan view of another variant of the hologram provided in the integrated optical unit;
Figure 10 is a plan view of the package encasing another variant of the photodetector IC;

Figure 11 schematically shows a variant of the integrated optical unit; and

Figure 12 explains the relation between the light source and light detector of the conventional integrated optical unit.

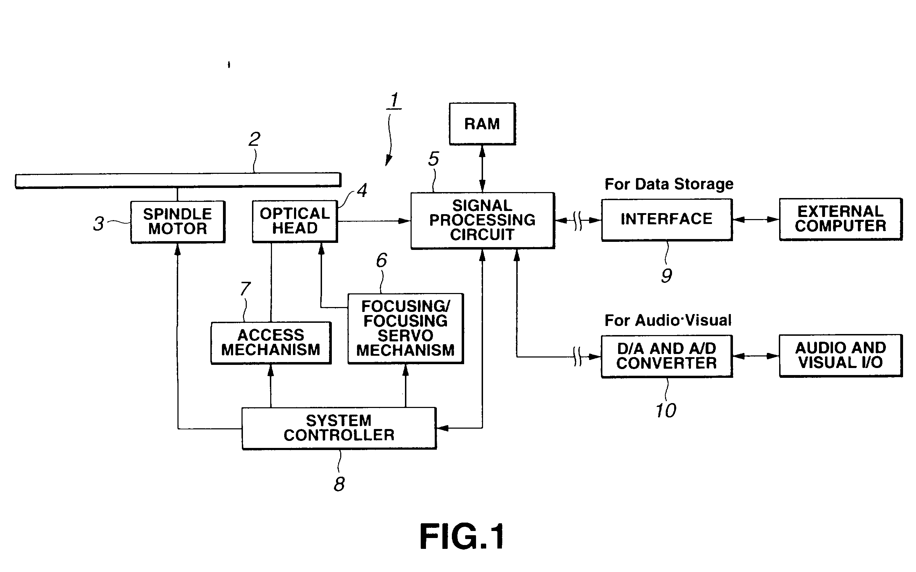

Figure 1 schematically illustrates the preferred embodiment of the optical recording and/or reproducing apparatus according to the present invention. The optical recording and/or reproducing apparatus 1 is compatible with two types of optical discs to and/or from which information can be written and/or read using laser beams with two different wavelengths, such as CD-R (compact disc-recordable) and DVD (digital versatile or video disc). As shown, the more important elements of apparatus 1 include a spindle motor 3 to rotate an optical disc 2; an optical head 4 to irradiate a light beam to a signal recording surface of the optical disc 2 and detect a return light from the optical disc; a signal processing circuit 5 to produce a read signal and a control signal based on the return light detected by the optical head 4; a focusing and tracking servo mechanism 6 for control of focusing and tracking based on the control signal from the signal processing circuit 5; an access mechanism 7 to move the optical head 4 to a predetermined track on the optical disc 2; and a system controller 8 to control, based on a signal produced by the signal processing circuit 5, the spindle motor 3, focusing and tracking servo mechanism 6 and access mechanism 7. The spindle motor 3 is driven under the control of the system controller 8 to rotate the optical disc 2 at a predetermined speed.

The optical head 4 propagates a light beam to the signal recording surface of the optical disc 2 being rotated by the spindle motor 3 and detects the return light reflected from the signal recording surface of the optical disc to provide a detection signal to the signal processing circuit 5. The emitted light beam has an optimum wavelength for the type of the optical disc 2 being used. For example, when the optical disc 2 is a CD-R, the optical head 4 will emit a light beam having a wavelength of about 780 nm. When the optical disc 2 is a DVD, the optical head 4 will emit a light beam having a wavelength of about 650 nm.

The signal processing circuit 5 demodulates, by a demodulating circuit thereof, the acquired read signal and control signal based on the return light from the optical disc 2, detected by the optical head 4, and corrects errors in the modulated signals using an error correction circuit, also provided therein. The read signal demodulated and error-corrected by the signal processing circuit 5 is sent to an external computer via an interface 9 when the signal is intended for data storage in the computer. When the signal is intended for audio and visual use, it is converted from digital to analog by a D/A converter section of a D/A and A/D converter 10 and sent to an audio and visual apparatus.

The control signals demodulated by the signal processing circuit 5 are provided to the system controller 8. The system controller 8 drives the focusing and tracking servo mechanism 6 based on a focus error signal and a tracking error signal. Under the control of the system controller 8, the focusing and tracking servo mechanism 6 moves an objective lens included in the optical head 4 biaxially, that is, towards and away from the optical disc 2 and radially between the center and edge of the optical disc 2. Based on signals supplied from the system controller 8, the access mechanism 7 moves the optical head 4 radially along a predetermined recording track on the optical disc 2.

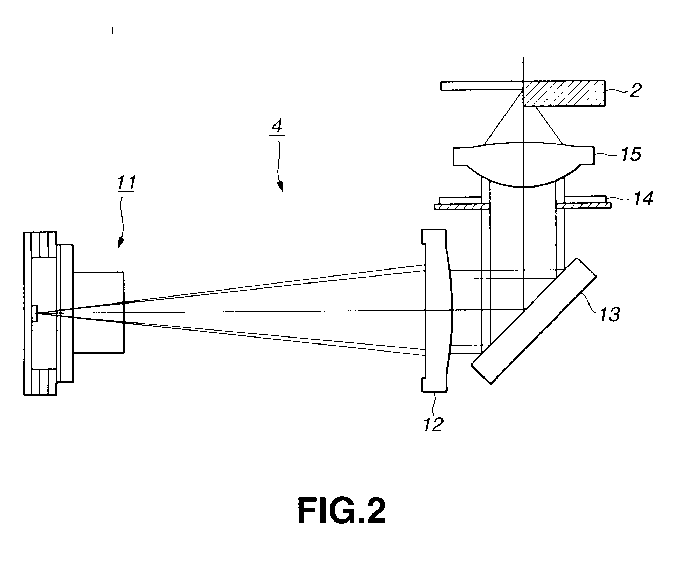

The optical head 4 forming the essential part of the present invention will be discussed in further detail hereinbelow. Figure 2 schematically illustrates an embodiment of the optical head 4. As shown, the optical head includes a one chip integrated optical unit 11 having integrally disposed therein a light source to emit two types of laser beams different in wavelength from each other and photodetectors for detecting a return component of a laser beam reflected from the signal recording surface of optical disc 2, a collimator lens 12 to shape into a parallel light beam the laser emitted as a divergent beam from the integrated optical unit 11, an optical path bending mirror 13 to bend by reflection the optical path of the parallel light from the collimator lens 12, an aperture limiting filter 14 to constrain the diameter of the laser, and an objective lens 15 to converge the laser and focus it on the signal recording surface of the optical disc 2.

Objective lens 15 is supported on a movable lens support (not shown). As the lens support is moved by the focusing and tracking servo mechanism 6 based on the focus error signal and tracking error signal 5, the objective lens 15 is moved biaxially. Namely, the lens is moved towards and away from the disc and radially with respect to the disc. In order for the laser beam emitted from the integrated optical unit 11 to always be focused on the signal recording surface of the optical disc 2, the objective lens 15 converges the laser light and follows along the recording tracks on the disc.

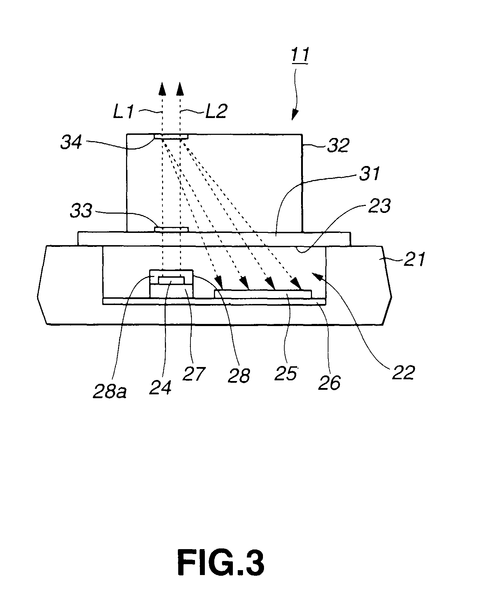

As shown in Figures 3-5, the integrated optical unit 11 is provided with a package 21 which is made from a synthetic resin. The package 21 has a substrate compartment 22 with an opening 23 in one of the main sides of the package 21. In this substrate compartment 22 is a substrate 26 having installed thereon a two-wavelength semiconductor laser 24 that emits two laser beams of different wavelengths and a photodetector IC 25 to detect the return component of any light emitted from the two-wavelength semiconductor laser 24 which is reflected back from the signal recording surface of the optical disc 2. The substrate 26 is housed so as to be generally parallel to the opening 23.

The two-wavelength semiconductor laser 24 is of a type utilizing the recombination radiation of the semiconductor. It is adapted to selectively emit a laser beam having an optimum wavelength of about 780 nm for CD-R (referred to as "first laser L1" hereinafter) and a laser beam having an optimum wavelength of about 650 nm for DVD (referred to as "second laser L2" hereinafter). That is, when a CD-R is loaded as the optical disc 2, the two-wavelength semiconductor laser 24 emits the optimum laser L1 for the CD-R. Similarly, when a DVD is loaded as the optical disc 2, the two-wavelength semiconductor laser 24 emits the optimum laser light L2 for the DVD.

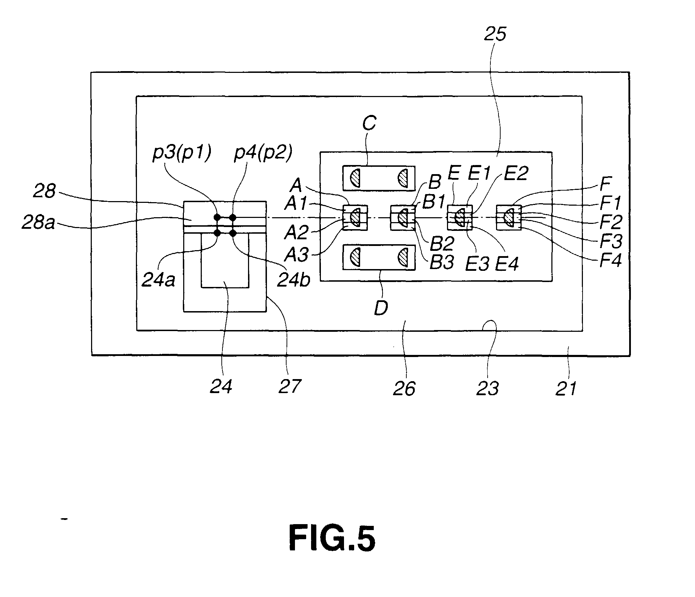

The two-wavelength semiconductor laser 24 has a first port 24a from which the first laser L1 is emitted, and a second port 24b from which the second laser L2 is emitted, disposed at positions near to each other (see Figure 5). Therefore, the first and second laser beams L1 and L2 emitted from the two-wavelength semiconductor laser 24 will be guided along nearly the same optical path to irradiate the optical disc 2.

The two-wavelength semiconductor laser 24 is supported on a support member 27 installed on the substrate 26. The support member 27 has formed integrally at one end thereof a reflector 28 to reflect the first laser L1 and second laser L2.

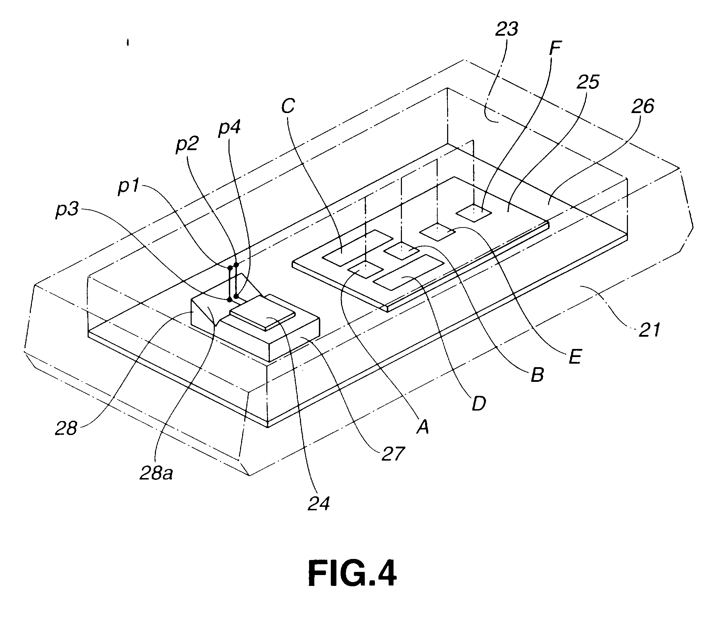

As shown in Figures 3 and 4, the reflector 28 has a reflective surface 28a inclined at an angle of about 45 degrees in relation to the substrate 26. The reflective surface 28a is opposite the first and second light emitting ports 24a and 24b. Thus, the first laser L1 is emitted from the first port 24a in a direction generally parallel to the substrate 26 and is reflected by the reflective surface 28a. The optical path for the first laser L1 is thus bent at nearly a right angle relative to the substrate 26. The first laser L1 is thus guided outside the package 21 through opening 23. Likewise, the second laser L2 is emitted from the second port 24b in a direction generally parallel to the substrate 26 and is reflected by the reflective surface 28a. The optical path for the second laser L2 is also bent at nearly a right angle relative to the substrate 26. The second laser L2 is thus guided outside the package 21 through opening 23.

The photodetector IC 25 is integrally formed from photodetectors that detect a return component of the first laser L1 from the signal recording surface of the optical disc 2 (CD-R) and a return component of the second laser L2 from the signal recording surface of the optical disc 2 (DVD), and a current/voltage conversion circuit to convert a current from the photodetectors to a voltage.

The photodetector IC 25 includes four photodetectors A to D to detect a return component of the first laser L1 and two photodetectors E and F to detect a return component of the second laser L2, as is shown in Figures 4 and 5.

Photodetectors A and B are each divided into three photodetective areas A1, A2 and A3 and B1, B2 and B3, respectively. These areas run in a direction corresponding to the radial direction of the optical disc 2 as shown in Figure 5. The photodetective areas A1 to A3 and B1 to B3 detect the return components of the first laser L1 to provide a detection signal for the optical disc 2. From the detected signal a read signal and a focus error signal based on the differential trisection method are calculated. The remaining two photodetectors C and D are disposed at the right and left of the photodetector A. That is, at positions off photodetector A in a direction perpendicular to the radial direction of the optical disc 2. These photodetectors C and D detect the return components of the first laser L1 to provide a detection signal. A tracking error signal based on the three-beam method is calculated from this detection signal.

The two photodetectors E and F which detect a return component of the second laser L2 are divided into four photodetective areas E1, E2, E3 and E4, and F1, F2, F3 and F4, in a direction corresponding to the radial direction of the optical disc 2 as shown in Figure 5. These photodetective areas E1 to E4 and F1 to F4 detect the return component of the second laser L2 to provide a detection signal for the optical disc 2 (DVD). From this detection signal, a read signal, a focus error signal based on the differential trisection method, and a tracking error signal based on the DPD (Differential Phase Detection) method are calculated.

In the plane of the integrated optical unit 11 there are disposed the A, B, E and F photodetectors extending on a line connecting a point p1 inside the opening 23 of the package 21 by which a main ray of light of the first laser L1 emitted from the two-wavelength semiconductor laser 24 and reflected at the reflective surface 28a of the reflector 28 passes and a point p2 inside the opening 23 of the package 21 by which a main ray of light of the second laser L2 emitted from the two-wavelength semiconductor laser 24 and reflected at the reflective surface 28a of the reflector 28 passes.

The first and second laser beams L1 and L2 reflected by the reflective surface 28a travel in a direction generally perpendicular to the substrate 26 and pass through the opening 23. Therefore, in the plane of the integrated optical unit 11, the point p1 projects to a point p3 on the reflective surface 28a of the reflector 28 at which the main ray of the first laser is reflected, while the point p2 projects to a point p4 on the reflective surface 28a at which the main ray of the second laser is reflected. Thus, a line connecting the point p3 and the point p4 will be parallel with a line connecting the point p1 and the point p2. The four photodetectors, A, B, E and F, are disposed on an extension of this line.

The four photodetectors are disposed in this manner to attain a compact design of the entire integrated optical unit 11 and thus a compact and thin design of the whole apparatus. The photodetectors C and D are appropriately positioned to effect a tracking control by the three-beam method.

An optical member 32 (Figure 3) is installed via a support plate 31 on the main side of the package 21 on which the opening 23 is formed. The first and second laser beams L1 and L2 emitted from the two-wavelength semiconductor laser 24 and reflected at the reflective surface 28a of the reflector 28 are transmitted through the support plate 31 and optical member 32. Likewise, the return component of the first and second laser is passed back through the support plate 31 and optical member 32 into the substrate compartment 22 of the package 21.

The support plate 31 seals opening 23 of the package 21 while supporting the optical member 32. It is made of a transparent material such as glass, shaped into a plate having sufficient size to cover opening 23. The support plate 31 is attached with an adhesive or the like to the main side of the package 21 on which the opening 23 is formed. The optical member 32 is formed from a transparent material such as glass, shaped into a block having the form of a rectangular parallelopiped. The optical member 32 is attached with an adhesive or the like to the support plate 31.

A grating 33 is formed as a light splitting means on the lower side of the optical member 32, attached to the support plate 31, in a position where the first and second laser beams L1 and L2 are incident. The grating 33 splits the first laser L1 incident upon the optical member 32 into at least three beams including a zero-order diffracted light as a main beam, and positive and negative first-order diffracted beams as side beams.

When a CD-R is the optical disc 2 loaded in the optical recording and/or reproducing apparatus 1, return components of the two side beams produced by the grating 33 are detected by the photodetectors C and D of the aforementioned photodetector IC 25 to effect a tracking control by the three-beam method. Note that the grating 33 should preferably be designed to pass nearly 100% of the zero-order light and not to diffract the second laser L2. By designing the grating 33 in this manner, the second laser L2 is not weakened in intensity and thus the efficiency for light utilization is improved.

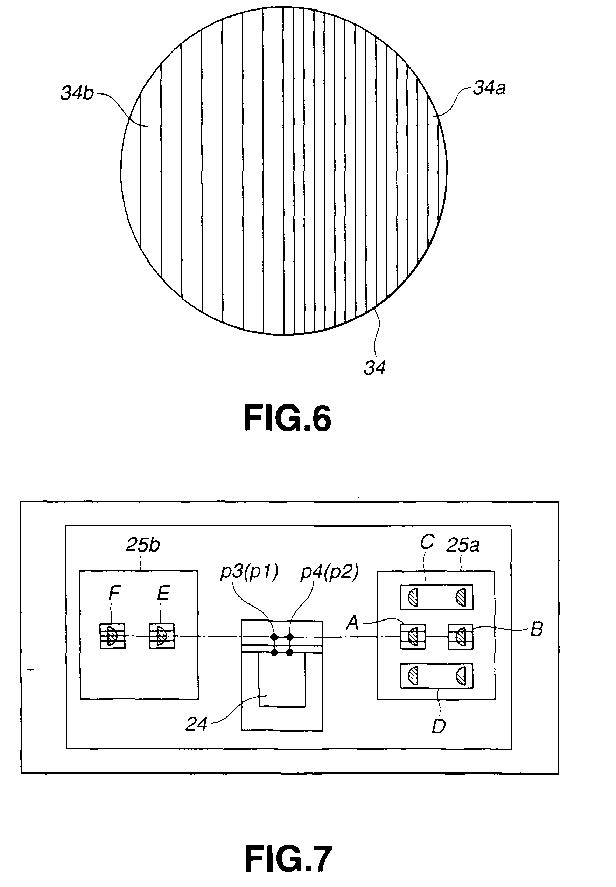

A hologram 34 is formed as an optical path branching means on the upper side of the optical member 32 in a position where the return component of the first or second laser L1 or L2 is incident. The hologram 34 is bisected tangentially with respect to the optical disc 2 into two holographic areas 34a and 34b, as shown in Figure 6. The two holographic areas 34a and 34b have formed thereon holographic gratings; each having different grating constants. Since the light incident upon one (34a) of the holographic areas 34a and 34b and the light incident upon the other holographic area 34b are diffracted at different angles, respectively, the return components of the first or second laser L1 or L2 incident upon the hologram 34 will be guided along a plurality of optical paths.

When a CD-R is loaded in the optical recording and/or reproducing apparatus 1 according to the present invention, the positive first-order light of the return component of the first laser L1, diffracted by one of the holographic areas (34a) of the hologram 34 and the positive first-order light diffracted by the other holographic area 34b are detected by the photodetectors A and B, respectively. The positive first-order diffracted beams are defocused before and after the focus, respectively, to effect a focusing control by the differential trisection method.

Similarly, when a DVD is loaded in the optical recording and/or reproducing apparatus 1 according to the present invention, the positive first-order light of the return component of the second laser L2, diffracted by one of the holographic areas (34a) of the hologram 34 and the positive first-order light diffracted by the other holographic area 34b are detected by the photodetectors E and F, respectively. The positive first-order diffracted beams are defocused before and after the focus, respectively, to effect a focusing control by the differential trisection method.

The operation of the aforementioned optical recording and/or reproducing apparatus 1 is described hereinbelow.

First, the use of a CD-R as the optical disc 2 in the optical recording and/or reproducing apparatus will be described. When the optical disc is loaded in the apparatus, the spindle motor 3 rotates the optical disc at a predetermined speed under the control of the system controller 8. A drive current is supplied to the two-wavelength semiconductor laser 24 included in the integrated optical module 11 provided in the optical head 4, and a first laser L1 having a wavelength of about 780 nm is emitted from the first por 24a. The first laser L1 thus emitted travels in a direction generally parallel to the substrate 26 housed in the substrate compartment 22 of the package 21, and is reflected at the reflective surface 28a Thus, the first laser L1 is guided along an optical path at a right angle relative to the substrate 26, and thus enters into the support plate 31 through opening 23 of the package 21. The first laser L1 then passes through the support plate 31 and is transmitted into optical member 32, passing through the grating 33 provided on the lower side of the optical member 32. The first laser L1 is thereby split into at least three beams including a zero-order main beam and positive and negative first-order beams as side beams. The three beams, including the main and two side beams, pass out of the integrated optical unit 11 in a direction nearly parallel to the signal recording surface of the optical disc 2. The first laser L1 is shaped by the collimator lens 12 into a parallel beam, and reflected by the optical path bending mirror 13. It is thus guided along an optical path bent by 90 degrees, and travels in a direction nearly perpendicular to the signal recording surface of the optical disc 2. Then, the beam diameter is adjusted by the aperture limiting filter 14 and is incident upon the objective lens 15. The incident light is converged by the objective lens 15 and focused on a predetermined recording track on the signal recording surface of the rotating optical disc 2. At this point, the main and two side beams produced by the grating 33 define three spots on the signal recording surface of the optical disc 2.

The return component of the first laser L1 containing a signal component reflected from the signal recording surface of the optical disc 2 is passed again through the objective lens 15, aperture limiting filter 14, optical path bending mirror 13 and collimator lens 12, and into optical member 32 of the integrated optical unit 11. At this point, a part of the return component of the first laser light L1 passes through one of the holographic areas (34a) of the hologram 34 provided on the upper side of the optical member 32 while the other part of the return component passes through the other holographic area 34b. Thus, the return components are diffracted at different angles, respectively, by the holographic areas 34a and 34b and guided along a plurality of optical paths. The return components of the first laser L1 are passed through optical member 32, support plate 31, and into the package 21. The positive first-order light diffracted by holographic areas 34a and 34b is detected by the photodetectors A and B, respectively. The positive first-order diffracted beams are defocused before and after the focus, respectively. The two side beams are detected by photodetectors C and D, respectively.

The return components of the first laser L1 detected by the photodetectors A, B, C and D are photoelectrically converted by the photodetector IC 25, and supplied as a detection signal to the signal processing circuit 5. The signal processing circuit 5 calculates from the detection signal a read signal RF, a focus error signal FE by the differential trisection method, and a tracking error signal TR by the three-beam method. Assume here that the detection signals produced based on the beams detected by the photodetective areas A1, A2 and A3, and B1, B2 and B3, and photodetectors C and D are SA1, SA2, SA3, and SB1, SB2, SB3, SC and SD, respectively. Then, the read signal RF1, focus error signal FE1 and tracking error signal TR1 are determined from the following relations:

$$RF1 = SA1 + SA2 + SA3 + SB1 + SB2 + SB3 \qquad (1)$$

$$FE1 = (SA1 + SA3 + SB2) - (SA2 + SB1 + SB3) \qquad (2)$$

$$TR1 = SC - SD \qquad (3)$$

Next, the use of a DVD as the optical disc 2 in the apparatus 1 is described. When the optical disc 2 is loaded in the apparatus 1, the spindle motor 3 will rotate the optical disc 2 at a predetermined speed under the control of the system controller 8. A drive current is supplied to the two-wavelength semiconductor laser 24 included in the integrated optical modulate 11 provided in the optical head 4, and a second laser L2 having a wavelength of about 650 nm is emitted from the second port 24b. The second laser L2 thus emitted travels along the nearly same optical path as that for the first laser L1. It travels in a direction generally parallel to the substrate 26 housed in the substrate compartment 22 of the package 21, and is reflected at the reflective surface 28a. Thus, the second laser L2 is guided along an optical path at a right angle relative to the substrate 26, and thus enters the support plate 31 through opening 23 of the package 21. The second laser L2 then passes through the support plate 31 and into optical member 32. If the grating 33 provided on the lower side of the optical member 32 is designed to pass almost 100% of the zero-order component of the second laser L2, the second laser L2 passes through the grating 33 without being diffracted, then through optical member 32 and guided outside the integrated optical unit 11. The second laser L2 then travels in a direction generally parallel to the signal recording surface of the optical disc 2. The light then passes through the collimator lens 12 and is shaped into a parallel beam and reflected by the optical path bending mirror 13. It is then guided along an optical path bent by about 90 degrees and travels in a direction nearly perpendicular to the signal recording surface of the optical disc 2. The second laser L2 then has its beam diameter adjusted by the aperture limiting filter 14 to a different diameter from that of the first laser L1. The incident second laser L2 is converged by the objective lens 15 and focused on a predetermined recording track on the signal recording surface of the optical disc 2 which is being rotated.

The return component of the second laser L2, containing a signal component from the signal recording surface, is passed again through the objective lens 15, aperture limiting filter 14, optical path bending mirror 13, and collimator lens 12. It then is transmitted into optical member 32 of the integrated optical unit 11 and passes through hologram 34. Thus, the return component is diffracted by the hologram 34 and guided along a plurality of optical paths. The diffracted return component of the second laser L2 is passed through the support plate 31 and into the package 21. The positive first-order light diffracted by one of the holographic areas (34a) of the hologram 34 and the positive first-order light diffracted by the other holographic area 34b are detected by the photodetectors E and F, respectively. The positive first-order diffracted beams are also defocused before and after the focus.

The return component of the second laser L2 detected by the photodetectors E and F is photoelectrically converted by the photodetector IC 25 and supplied as a detection signal to the signal processing circuit 5. The signal processing circuit 5 calculates from the detection signal a read signal RF, a focus error signal FE by the differential trisection method, and a tracking error signal TR by the DPD method. Assume here that the detection signals produced based on the beams detected by the photodetective areas E1, E2, E3 and E4, and F1, F2, F3 and F4 are SE1, SE2, SE3 and SE4, and SF1, SF2, SF3 and SF4, respectively. Then, the read signal RF2, focus error signal FE2 and tracking error signal TR2 are calculated from the following relations:

$$RF2 = SE1 + SE2 + SE3 + SE4 + SF1 + SF2 + SF3 + SF4 \qquad (4)$$

$$FE2 = (SE1 + SE4 + SF2 + SF3) - (SE2 + SE3 + SF1 + SF4) \tag{5}$$

$$TR2 = (SE1 + SE2 + SF3 + SF4) - (SE3 + SE4 + SF1 + SF2) \tag{6}$$

In the foregoing discussion, an embodiment of the present invention was described in which were formed in one photodetector IC 25 the photodetectors A, B, C and D for detecting the return component of the first laser L1 and the photodetectors E and F for detecting the return component of the second laser L2, and the photodetector IC 25 was located at one side of the two-wavelength semiconductor laser 24. It should be noted however that the construction of the photodetector IC 25 in the optical recording and/or reproducing apparatus 1 is not limited to this embodiment but the photodetectors A, B, C and D for detection of the return component of the first laser L1 and the photodetectors E and F for detection of the return component of the second laser L2 may be formed on separate photodetector ICs 25a and 25b which are located on opposite sides of the two-wavelength semiconductor laser 24 as shown in Figure 7.

For this case, the photodetectors A and B formed on the photodetector IC 25a and the photodetectors E and F formed on the photodetector IC 25b are disposed on an extension of a projection of a line connecting the point p1 inside opening 23 of the package 21 by which the main ray of light of the first laser L1 passes and the point p2 inside opening 23 by which the main ray of light of the second laser L2 passes. That is, on an extension of a line connecting a point p3 on the reflective surface 28a of the reflector 28 at which the main ray of the laser L1 is reflected and a point p4 at which the second laser L2 is reflected. Note that in this embodiment, the positive first-order light of the return component of the first laser L1 diffracted by the holographic areas (34a) and that diffracted by holographic area 34b will be detected by photodetectors A and B, respectively, formed on one of the photodetector ICs (25a). Whereas, the side beams of the light detected by the photodetector A will be detected by the photodetectors C and D formed on the other photodetector IC 25. Also, the negative first-order light of the return component of the second laser L2 diffracted by holographic area (34a) and that diffracted by holographic area 34b, will be detected by photodetectors E and F, respectively, formed on the other photodetector IC 25b.

As described in the foregoing, the return component of the first laser L1 and that of the second laser L2 are detected by separate photodetectors, respectively, on the photodetector IC 25. In the optical recording and/or reproducing apparatus 1 of the present invention, however, photodetectors may be used in common for detection of both the return component of the first laser L1 and that of the second laser L2.

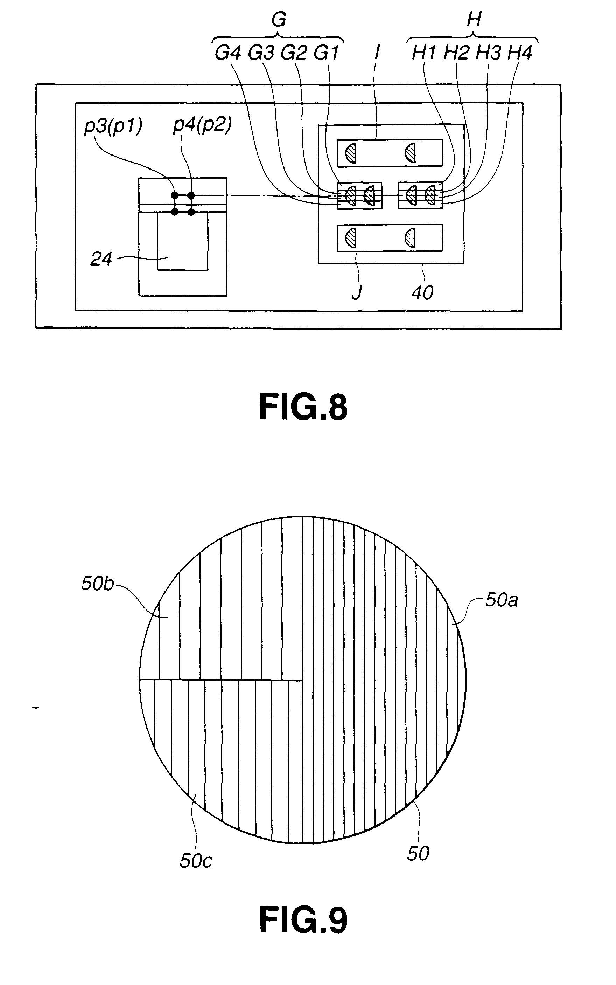

Figure 8 is a plan view of the package encasing another variant of the photodetector IC. In this photodetector IC 40, photodetectors are provided for use in common for detecting the return component of the first laser L1 and the second laser L2. The photodetector IC 40 includes two photodetectors G and H for detection of return components of both the first laser L1 and the second laser L2, and two photodetectors I and J for detection of other return components of the first laser L1. The two photodetectors G and H provided for detection of the return components of the first and second laser beams L1 and L2, consist of four photodetective areas G1, G2, G3 and G4, and H1, H2, H3 and H4 in a direction corresponding to the radial direction of the optical disc 2. The photodetector IC 40 detects, by these photodetective areas G1, G2, G3 and G4, and H1, H2, H3 and H4, the return component of the first laser L1 to provide a detection signal, for the optical disc 2 (CD-R), from which a read signal and a focus error signal based on the differential trisection method are to be calculated. Also, the photodetector IC 40 detects, by these photodetective areas G1, G2, G3 and G4, and H1, H2, H3 and H4, the return component of the second laser L2 to provide a detection signal, for the optical disc 2 (DVD), from which a read signal, focus error signal based on the differential trisection method and a tracking error signal based on the DPD method are to be calculated. The photodetector IC 40 detects, by the remaining two photodetectors I and J, the side beams of the return component of the first laser L1 to provide a detection signal from which a tracking error signal based on the three-beam method is to be calculated.

Assume here that detection signals produced as a function of the return beams detected by the photodetective areas G1, G2, G3 and G4, and H1, H2, H3 and H4 and photodetectors I and J of the photodetector IC 40 are SG1, SG2, SG3 and SG4, SH1, SH2, SH3 and SH4, and SI and SJ. Then, for the optical disc 2 (CD-R), a read signal RF1, focus error signal FE1 and tracking error signal TR1 are calculated from the following relations:

$$RF1 = SG1 + SG2 + SG3 + SG4 + SH1 + SH2 + SH3 + SH4 \tag{7}$$

$$FE1 = (SG1 + SG4 + SH2 + SH3) - (SG2 + SG3 + SH1 + SH4) \tag{8}$$

$$TR1 = SI - SJ \tag{9}$$

For the optical disc 2 (DVD), a read signal RF2, focus error signal FE2 and a tracking error signal TR2 are calculated from the following relations:

$$RF2 = SG1 + SG2 + SG3 + SG4 + SH1 + SH2 + SH3 + SH4 \qquad (10)$$

$$FE2 = (SG1 + SG4 + SH2 + SH3) - (SG2 + SG3 + SH1 + SH4) \qquad (11)$$

$$TR2 = (SG1 + SG2 + SH3 + SH4) - (SG3 + SG4 + SH1 + SH2) \qquad (12)$$

Note that when the photodetector IC is constructed as above, in a plane on which the integrated optical unit 11 is projected, the G and H photodetectors are disposed on an extension of a line that is a projection of a line connecting the point p1 inside the opening 23 of the package 21 by which the main ray of the first laser L1 passes and the point p2 inside opening 23 of the package 21 by which the main ray of the second laser L2 passes. That is, on an extension of a line connecting a point p3 on the reflective surface 28a of the reflector 28 at which the main ray of the laser L1 is reflected and a point p4 on the reflective surface 28a at which the second laser light L2 is reflected. Since the G and H photodetectors are disposed as above, the entire integrated optical unit 11 can be designed compactly while with the remaining two, I and J, photodetectors can be disposed appropriately to implement a proper tracking control by the three-beam method.

In the foregoing, the return component of the first or second laser L1 or L2 are detected to produce a focus error signal FE1 or FE2 by the differential trisection method. However, the present invention is not limited to such an embodiment; the focus error signals FE1 and FE2 may also be produced by the Foucault method. When the Foucault method is used, a hologram 50 is used similar to that shown in Figure 9. The hologram 50 consists of three holographic areas 50a, 50b and 50c having formed therein holographic gratings with different grating constants. The return components of the first and second laser beams L1 and L2 incident upon the hologram 50 are diffracted at different angles, respectively, depending upon the grating constants of the holographic areas upon which the return beams are incident.

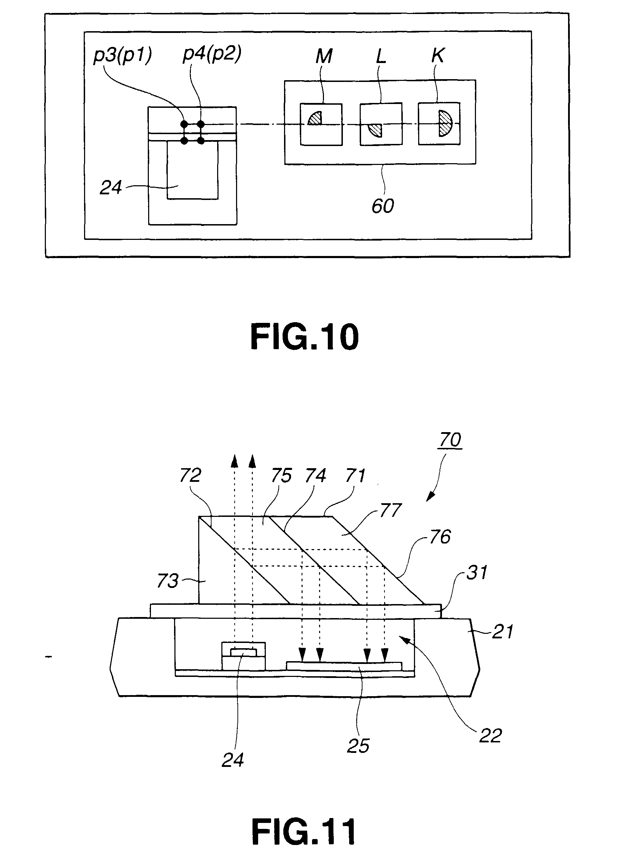

In this case, the integrated optical unit 11 uses a photodetector IC 60 shown in Figure 10. The photodetector IC 60 consists of three photodetectors K, L and M each bisected in a direction corresponding to the radial direction of the optical disc 2. A positive first-order light diffracted by the first holographic area 50a of the hologram 50 is detected by the photodetector K of the photodetector IC 60. A positive first-order light diffracted by the third holographic area 50c of the hologram 50 is detected by the photodetector L. A positive first-order light diffracted by the second holographic area 50b of the hologram 50 is detected by the photodetector M. The hologram 50 is formed at a position on the upper side of the optical member 32 by which the return component of the first or second laser light L1 or L2 passes, and also includes the photodetector IC 60 shown in Figure 10. The focus error signals FE1 and FE2 can be produced by the Foucault method and the tracking error signals TR1 and TR2 can be produced by the DPD method.

Also, in a plane on which the integrated optical unit 11 is projected, the three photodetectors K, L and M included in the photodetector IC 60 are disposed on an extension of a projection of a line connecting the point p1 inside opening 23 of the package 21 by which the main ray of the first laser L1 passes and the point p2 by which the main ray of the second laser L2 passes. That is, on an extension of a line connecting the point p3 on the reflective surface 28a of the reflector 28 at which the main ray of the first laser L1 is reflected and the point p4 on the reflective surface 28a at which the main ray of the second laser L2 is reflected.

In the foregoing embodiments, the present invention has been described with the hologram 34 or 50 as the optical path branching means formed at the position on the upper side of the optical member 32 by which the return component of the first or second laser L1 or L2 passes. However, the integrated optical unit 11 included in the optical recording and/or reproducing apparatus 1 of the present invention is not limited to the foregoing embodiments. For example, a composite prism 71 may be attached to the package 21 via the support plate 31 as shown in Figure 11, and used as the optical path branching means.

Figure 11 schematically shows a variant of the integrated optical unit 70. As shown, the composite prism 71 used in the integrated optical unit 70 includes a first prism member 73 on which there is formed a beam splitting layer 72 to separate the first or second laser beam L1 or L2 emitted towards the optical disc 2 from the return component of the first or second laser L1 or L2 reflected from the optical disc 2; a second prism member 75 on which there is formed a semi-permeable layer 74 to allow to pass a part of the return component of the first or second laser L1 or L2 while reflecting the other part of the return component; and a third prism member 77 on which there is formed a total reflection layer 76 to totally reflect the return component of the first or second laser L1 or L2 having passed through the semi-permeable layer 74. The first prism member 73 is a transparent triangular prism having a surface inclined at about 45 degrees in relation to the substrate 26. The beam splitting layer 72 is formed on the oblique surface of the first prism member 73. The second prism member 75 is a transparent prism having a parallelogram-shaped section having a pair of surfaces inclined at about 45 degrees relative to the substrate 26. The second prism member 75 is joined at one of the oblique surfaces thereof to the first prism member 73 with the beam splitting layer 72 between them. The semi-permeable layer 74 is formed on the other oblique surface of the second prism member 75. Similar to the second prism member 75, the third prism member 77 is a transparent prism having a parallelogram-shaped section having a pair of surfaces inclined at about 45 degrees relative to the substrate 26. The third prism member 77 is joined at one of the oblique surfaces thereof to the second prism member 75 with the semi-permeable layer 74 between them. The total reflection layer 76 is formed on the other oblique surface of the third prism member 77.

When the return component of the first or second laser L1 or L2 is incident upon the composite prism 71 constructed as described above, the return components will be partially reflected by the beam splitting layer 72. The return component of the first or second laser L1 or L2, reflected by the beam splitting layer 72, will pass through the second prism member 75 and be incident upon the semi-permeable layer 74. A part of the incident return component will be reflected while the other part will pass through the semi-permeable layer 74. Thereby, the optical path for the return component is divided into two optical paths. The return component of the first or second laser L1 or L2, reflected by the semi-permeable layer 74 is incident upon the package 21 and detected by the photodetectors in the photodetector IC 25. The return component of the first or second laser L1 or L2 having passed through the semi-permeable layer 74 passes through the third prism member 77 and then is reflected by the reflection layer 76 into the package 21 where it is detected by the photodetectors of the photodetector IC 25.

The return component of the first or second laser L1 or L2, detected by the photodetectors of the photodetector IC 25 is photoelectrically converted to provide a detection signal which is supplied to the signal processing circuit 5. The signal processing circuit 5 calculates from the detection signal a read signal, focus error signal, and a tracking error signal.

In the foregoing, the first or second laser L1 or L2 is emitted in a direction generally parallel to the substrate 26, reflected by the reflective surface 28a along an optical path bent at about 90 degrees in a direction nearly perpendicular to the substrate 26, and then directed outside the package 21 through the opening 23 in the package 21. However, the optical recording and/or reproducing apparatus 1 according to the present invention is not limited to the one described above. For example, the first or second laser L1 or L2 may be emitted from the two-wavelength semiconductor laser 24 and guided in a direction generally perpendicular to the substrate 26, without using the reflector 28. In such example, the first light emitting port 24a of the two-wavelength semiconductor laser 24 from which the first laser light L1 is emitted will coincide with the point p1 inside the opening 23 of the package 21 by which the main ray of the first laser L1 passes, and the second light emitting port 24b of the two-wavelength semiconductor laser at which the second laser L2 is emitted will coincide with the point p2. In this case, the photodetectors A, B, E and F on the photodetector IC 25, photodetectors G and H on the photodetector IC 40, or the photodetectors K, L and M on the photodetector IC 60, will be disposed on an extension of a line connecting the first and second light emitting ports.

In the foregoing, the integrated optical unit 11 has a two-wavelength semiconductor laser 24 adapted to emit the first and second laser beams L1 and L2. However, as an alternative, separate semiconductor lasers for the first laser L1 and for the second laser L2 may be provided; with both lasers being disposed near to each other.

In the foregoing, the first or second laser L1 or L2 is shaped by the collimator lens 12 into parallel light. However, when a finite object lens is used as the objective lens 15, the collimator 12 will not be necessary.

Also, the first or second laser L1 or L2 has been described as having its optical path bent by the mirror 13 and made incident upon the objective lens 15 through the aperture limiting filter 14, whereby spherical aberration is corrected. However, if other means for correcting the spherical aberration is provided, the aperture limiting filter 14 will not be necessary. Also, the optical head 4 may be adapted such that the first or second laser L1 or L2 is incident directly upon the objective lens 15 without its optical path being bent. Nevertheless, it is preferable for the optical path to be generally parallel to the signal recording surface of the optical disc 2 to allow for a thinner design of the optical recording and/or reproducing apparatus 1.

The optical recording and/or reproducing apparatus 1 according to the present invention may also be adapted to write and/or read information to and/or from two or more types of recording media with laser beams of different wavelengths, respectively. Therefore, the number of types of optical disc 2 is not limited to the aforementioned CD-R and DVD.

In the integrated optical unit according to the present invention, since at least two of the plurality of photodetectors are disposed on an extension of a line connecting the points at which the main rays of light of the first and second lasers pass, the return component of the first or second laser light can appropriately be detected and the remaining photodetectors of the return light detecting means can be disposed relatively freely. For example, the photodetectors for detection of the positive and negative first-order components of the first laser should be disposed to produce a tracking error signal by the three-beam method.

It will thus be seen that the objects set forth above, among those made apparent from the preceding description, are efficiently attained and, because certain changes may be made in carrying out the above method and in the construction(s) set forth without departing from the scope of the invention, it is intended that all matter contained in the above description and shown in the accompanying drawings shall be interpreted as illustrative and not in a limiting sense.

## Claims

1. An integrated optical unit for use in an optical head compatible with both a first optical recording medium, to and/or from which information is recorded and/or read with a first laser, and a second optical recording medium, to and/or from which information is recorded and/or read with a second laser shorter in wavelength than the first laser; the integrated optical unit comprising:

   a package having an opening and encasing a light emitter and a light detector;
   said light emitter for emitting first and second laser beams from said first laser and said second laser, respectively; the first and second laser beams being emitted from ports located close to one another;
   said light detector including a plurality of photodetectors to detect a return component of the first laser reflected from the first optical recording medium, and a return component of the second laser reflected from the second optical recording medium; and

   wherein at least two of said plurality of photodetectors in said light detector are disposed in the plane of the integrated optical unit and are disposed on an extension of a first line connecting a point on the inside of said opening by which a main ray of light of the first laser beam passes out of said package and a point on the inside of said opening by which a main ray of light of the second laser beam passes out of said package.

2. The integrated optical unit according to claim 1, further comprising a light reflector for reflecting towards the opening of said package the first and second laser beams emitted from said light emitter; and
   wherein said light reflector defines a second line connecting a point at which a main ray of light of the first laser beam is reflected by the light reflector means and a point at which a main ray of light of the second laser beam is reflected by the light reflector so that said second line is parallel with said first line.

3. The integrated optical unit according to claim 1, wherein a third line connecting the light emitting points of the light emitter is parallel with said first line and said second line.

4. The integrated optical unit according to claim 1, further comprising an optical path brancher for branching the return component of said first laser beam, reflected from the first optical recording medium, into a first plurality of optical paths and for branching the return component of said second laser beam, reflected from the second optical recording medium, into a second plurality of optical paths; and
   wherein said first and second plurality of optical paths are incident upon said light detector.

5. The integrated optical unit according to claim 4, wherein said optical path brancher comprises diffracter for diffracting the return component of the first laser beam and the return component of the second laser beam, respectively.

6. The integrated optical unit according claim 4, wherein said optical path brancher comprises an optical prism having a semi-permeable membrane.

7. The integrated optical unit according to claim 1, further comprising a beam splitter for splitting said first laser beam from said light emitter into at least three light beams including a zero-order light beam, positive first-order light beam and negative first-order light beam.

8. The integrated optical unit according to claim 7, wherein said beam splitter is designed to pass substantially all of the zero-order light beam.

9. The integrated optical unit according to claim 7, wherein the positive and negative first-order light beams are detected by photodetectors from said plurality of photodetectors which are not disposed on an extension of said first line, thereby facilitating the calculation of a tracking error signal based on the three-beam method.

10. The integrated optical unit according to claim 1, wherein said two photodetectors disposed on an extension of said first line provide detection signals for facilitating the calculation of a focus error signal based on the return components of said first laser beam and said second laser beam.

**11.** The integrated optical unit according to claim 1, wherein said two photodetectors disposed on an extension of said first line provide detection signals for facilitating the calculation of a focus error signal based on the differential trisection method and a tracking error signal based on the DPD (Differential Phase Detection) method.

**12.** The integrated optical unit according to claim 1, wherein three photodetectors disposed on an extension of said first line to provide detection signals for facilitating the calculation of a focus error signal based on the Foucault method and a tracking error signal based on the DPD (Differential Phase Detection) method.

**13.** The integrated optical unit according to claim 1, wherein said two photodetectors disposed on an extension of said first line detect an information signal recorded on the first and second optical recording mediums.

**14.** The integrated optical unit according to claim 1, wherein said light emitter comprises a two-wavelength semiconductor laser diode adapted to emit said first and second laser beams.

**15.** The integrated optical unit according to claim 1, wherein said light emitter comprises a first semiconductor laser diode adapted to emit said first laser beam and a second semiconductor laser diode adapted to emit said second laser beam.

**16.** An optical head compatible with both a first optical recording medium, to and/or from which information is recorded and/or read with a first laser, and a second optical recording medium, to and/or from which information is recorded and/or read with a second laser shorter in wavelength than the first laser light; the optical head comprising:

a light converger for converging said first laser and propagating it onto said first optical recording medium, and for converging the second laser and propagating it onto said second optical recording medium; and
an integrated optical unit comprising:

a package having an opening and encasing a light emitter and a light detector;
said light emitter for emitting the first and second laser beams from said first laser and said second laser, respectively; the first and second laser beams being emitted from ports located close to one another;
said light detector including a plurality of photodetectors to detect a return component of the first laser reflected from the first optical recording medium, and a return component of the second laser reflected from the second optical recording medium; and
wherein at least two of said plurality of photodetectors in said light detector are disposed in the plane of the integrated optical unit and are disposed on an extension of a first line connecting a point on the inside of said opening by which a main ray of light of the first laser beam passes out of said package and a point on the inside of said opening by which a main ray of light of the second laser beam passes out of said package.

**17.** The optical head according to claim 16, further comprising a light reflector for reflecting towards the opening of said package the first and second laser beams emitted from said light emitter; and
wherein said light reflector defines a second line connecting a point at which a main ray of light of the first laser beam is reflected by the light reflector and a point at which a main ray of light of the second laser beam is reflected by the light reflector so that said second line is parallel with said first line.

**18.** The optical head according to claim 16, wherein a third line connecting the light emitting points of the light emitter is parallel with said first line and said second line.

**19.** The optical unit according to claim 16, further comprising an optical path branching means for branching the return component of said first laser beam, reflected from the first optical recording medium, into a first plurality of optical paths and for branching the return component of said second laser beam, reflected from the second optical recording medium, into a second plurality of optical paths; and
wherein said first and second plurality of optical paths are incident upon said light detector.

**20.** An optical recording and/or reproducing apparatus provided with an optical head compatible with both a first optical recording medium, to and/or from which information is recorded and/or read with a first laser, and a second optical recording medium, to and/or from which information is recorded and/or read with a second laser shorter in wavelength than the first laser; the optical head comprising:

a light converger for converging said first laser and propagating it onto said first optical recording medium, and for converging the second laser and propagating it onto said second optical recording medium; and
an integrated optical unit comprising:

a package having an opening and encasing a light emitter and a light detector;
said light emitting means emitting first and second laser beams from said first laser and said second laser, respectively; the first and second laser beams being emitted from ports located close to one another;
said light detector including a plurality of photodetectors to detect a return component of the first laser reflected from the first optical recording medium, and a return component of the second laser reflected from the second optical recording medium; and
wherein at least two of said plurality of photodetectors in said light detector are disposed in the plane of the integrated optical unit and are disposed on an extension of a first line connecting a point on the inside of said opening by which a main ray of light of the first laser beam passes out of said package and a point on the inside of said opening by which a main ray of light of the second laser beam passes out of said package.

21. The optical recording and/or reproducing apparatus according to claim 20, further comprising a light reflector means for reflecting towards the opening of said package the first and second laser beams emitted from said light emitter means; and
wherein said light reflector defines a second line connecting a point at which a main ray of light of the first laser beam is reflected by the light reflector and a point at which a main ray of light of the second laser beam is reflected by the light reflector so that said second line is parallel with said first line.

22. The optical recording and/or reproducing apparatus according to claim 20, wherein a third line connecting the light emitting points of the light emitter is parallel with said first line and said second line.

23. The optical recording and/or reproducing apparatus according to claim 20, further comprising an optical path branching means for branching the return component of said first laser beam, reflected from the first optical recording medium, into a first plurality of optical paths and for branching the return component of said second laser beam, reflected from the second optical recording medium, into a second plurality of optical paths; and
wherein said first and second plurality of optical paths are incident upon said light detector.

FIG.1

FIG.2

**FIG.3**

FIG.4

**FIG.5**

18

34b

34a

34

# FIG.6

25b

C  25a

F     E

p3(p1)    p4(p2)

A

B

24

D

# FIG.7

**FIG.8**

**FIG.9**

**FIG.10**

**FIG.11**

**FIG.12**